# FASCICULE DE BREVET EUROPEEN

(11) **EP 2 486 649 B1**
(45) Date de publication et mention de la délivrance du brevet: **06.07.2016**
(21) Numéro de dépôt: 10768868.1
(22) Date de dépôt: 07.10.2010
(51) Int. Cl.: H02P 6/24, H02P 3/22, H02P 25/02, H02P 25/024

(54) **CIRCUIT D'AMORTISSEMENT VARIABLE POUR SERVOMOTEUR SYNCHRONE**
VARIABLE DÄMPFERSCHALTUNG FÜR SYNCHRONEN SERVOMOTOR
VARIABLE DAMPING CIRCUIT FOR A SYNCHRONOUS SERVOMOTOR

(30) Priorité: 09.10.2009 FR 0904863
(43) Date de publication de la demande: 15.08.2012
(73) Titulaire: SAGEM DEFENSE SECURITE, 92100 Boulogne Billancourt (FR)
(72) Inventeur: FOURMONT, Tony, 92100 BOULOGNE-BILLANCOURT (FR); DELNAUD, Franck, 92100 BOULOGNE-BILLANCOURT (FR); PIATON, Jérôme, 92100 BOULOGNE-BILLANCOURT (FR); CASIMIR, Roland, 92100 BOULOGNE-BILLANCOURT (FR)
(74) Mandataire: Lavialle, Bruno François Stéphane
(86) Numéro de dépôt international: PCT/EP2010/006133
(87) Numéro de publication internationale: WO 2011/042186

(56) Documents cités:
- DE-A1-102004 032 680
- US-A- 4 426 606
- US-A1- 2004 160 208
- US-A1- 2008 150 459

## Description

La présente invention concerne un circuit d'amortissement pour un servomoteur synchrone.

Dans le domaine aéronautique, des servomoteurs sont utilisés dans la chaîne de commande des surfaces de vol. Ces servomoteurs sont généralement utilisés comme actionneurs et amortisseurs mais peuvent être également utilisés en tant qu'amortisseurs seulement. Dans ce dernier mode de fonctionnement, l'élément mobile du servomoteur est déplacé par une force extérieure engendrant dans les enroulements du servomoteur une énergie électrique qui est conduite dans des résistances d'amortissement pour y être dissipée. L'amortissement ainsi procuré suit une loi linéaire dont la pente dépend directement de la valeur des résistances.

Le document US 2004/0160208 décrit un circuit d'amortissement d'un moteur comprenant une telle résistance d'amortissement raccordée à l'enroulement du moteur.

On comprend toutefois qu'il serait souhaitable d'avoir un amortissement plus important lorsque l'élément mobile est déplacé de manière brusque et rapide.

Le document US 2008/0150459 décrit un circuit d'amortissement comprenant deux résistances d'amortissement activables de façon séparée.

Il a pour cette raison été envisagé des circuits procurant une loi d'amortissement non linéaire. Il est ainsi connu des circuits d'amortissement faisant appel à des relais électromécaniques. Ces relais posent des problèmes d'encombrement, de poids, et de fiabilité. En outre, il nécessite d'être piloté par un circuit de commande qu'il est nécessaire d'alimenter.

Il est également connu des circuits d'amortissement faisant appel à un circuit logique programmable. Ces circuits logiques programmables sont cependant complexes de sorte que les risques de défaillances sont relativement nombreux et leur qualification en vue d'une utilisation critique dans le fonctionnement d'un avion est très coûteuse. En outre, il est préférable d'utiliser des composants ne nécessitant pas d'être alimenté pour fonctionner de manière que l'amortissement puisse être assuré même en cas de rupture de l'alimentation.

Il aurait pu être envisagé de monter des diodes de type ZENER en série avec les résistances d'amortissement pour opérer un raccordement sélectif des résistances d'amortissement. Les diodes ZENER entraînerait cependant une déformation de la courbe de tension alors qu'il est souhaitable de conserver la forme sinusoïdale tant de la courbe de tension que de la courbe de courant. En outre, les tensions conduction des diodes ZENER sont fixées par les fabricants, limitant le choix de valeurs possibles.

Un but de l'invention est de fournir un moyen d'amortissement simple et peu coûteux.

A cet effet, on prévoit, selon l'invention, un servomoteur synchrone comprenant au moins un enroulement, le circuit comportant au moins une résistance principale d'amortissement, des moyens de raccordement de la résistance principale d'amortissement en série avec l'enroulement, et au moins une cellule d'amortissement additionnel comportant au moins une résistance additionnelle d'amortissement reliée en parallèle à la résistance principale d'amortissement via un commutateur statique raccordé à un module de commande du commutateur. La commande du commutateur s'effectue en fonction de la tension aux bornes de l'enroulement. Le module de commande comprend en parallèle de la résistance principale d'amortissement un shunt ayant une sortie reliée à l'entrée de commande du commutateur et un pont diviseur relié au shunt pour former un comparateur de la tension de l'enroulement à une tension de conduction du shunt.

Ainsi, le shunt devient passant lorsque la tension en sortie du pont diviseur est supérieure ou égale à la tension de conduction et commande le commutateur qui raccorde la résistance additionnelle d'amortissement en parallèle de la résistance principale d'amortissement. Le pont diviseur permet un réglage simple de l'activation de la ligne d'amortissement additionnel. On a donc ici une loi d'amortissement ayant au minimum deux pentes d'amortissement : à savoir une pente correspondant à la valeur de la résistance principale d'amortissement et une pente correspondant à la valeur résultant du montage en parallèle de la résistance principale d'amortissement et de la résistance additionnelle d'amortissement.

Le shunt est par exemple un régulateur ajustable agencé de manière à recevoir une référence de tension et être conducteur en inverse lorsque cette tension de référence atteint une tension de conduction. Le shunt est raccordé au pont diviseur de telle manière que la tension de sortie du pont diviseur constitue la tension de référence.

Ce circuit ne nécessite pas d'alimentation particulière, n'utilise que des composants simples et éprouvés de sorte qu'il est particulièrement robuste.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 représente schématiquement un circuit d'amortissement conforme à l'invention,

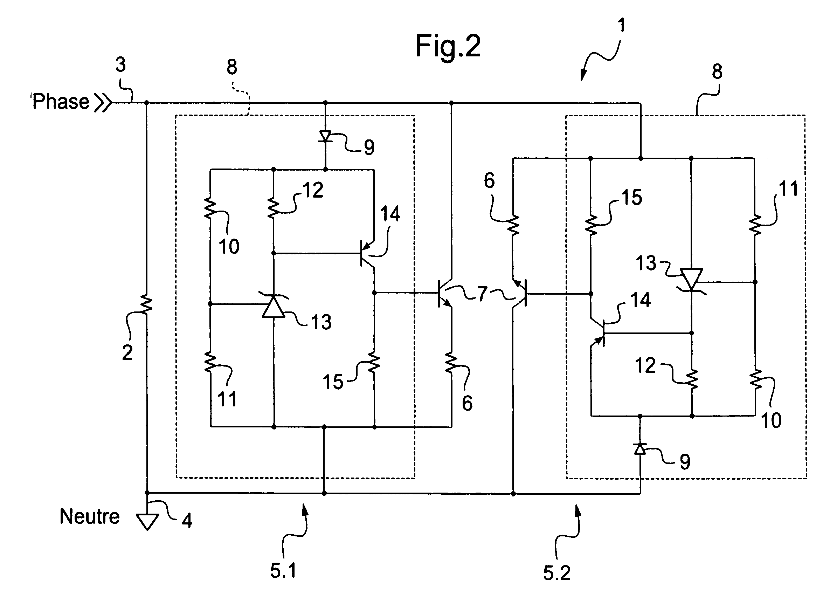

- la figure 2 est une vue de détail de la portion II de la figure 1
- la figure 3 est un diagramme avec une courbe illustrant la loi d'amortissement obtenue via une variante de l'invention, la vitesse du rotor est en abscisse, l'effort d'amortissement en ordonnée.

En référence aux figures, l'invention concerne un circuit d'amortissement, généralement désigné en 1, raccordé à un actionneur électrique, à savoir un servomoteur, généralement désigné en 100, de type synchrone.

Le servomoteur 100 comprend un rotor à aimants permanents non représenté et un stator comportant trois enroulements symbolisés ici en 110. Le servomoteur est relié par exemple par une chaîne de transmission de mouvement à une surface mobile de vol d'un aéronef. Lorsque le servomoteur 100 est alimenté, le servomoteur déplace la surface mobile de vol en réponse à des commandes du pilote de l'aéronef. Lorsque le servomoteur 100 n'est pas alimenté, le déplacement de la surface mobile de vol sous l'action d'une force extérieure par exemple aérodynamique entraîne un déplacement du rotor qui induit un courant dans les enroulements 110 de sorte que le servomoteur 100 fonctionne en générateur. Le courant est conduit dans le circuit d'amortissement pour y être dissipé en amortissant le mouvement du rotor.

Le circuit d'amortissement 1 comprend à cet effet pour chaque enroulement 110 une résistance principale d'amortissement 2 et des moyens de raccordement de la résistance principale d'amortissement 2 en série avec l'enroulement 110. Les moyens de raccordement comprennent ici simplement des lignes 3, 4 reliant chaque résistance principale d'amortissement 2 à l'enroulement 110 correspondant et à un neutre artificiel. Les moyens de raccordement peuvent également comprendre un commutateur permettant de relier directement les enroulements 110 à la masse sans passer par les résistances principales d'amortissement 2.

Le circuit d'amortissement 1 comprend en outre pour chaque enroulement deux cellules d'amortissement additionnel généralement désignées en 5 et individualisées au moyen des indices 1 et 2.

La cellules d'amortissement additionnel 5.1 comporte une résistance additionnelle d'amortissement 6 reliée en parallèle à la résistance principale d'amortissement 2 via un commutateur statique 7 raccordé à un module de commande 8 du commutateur 7 en fonction d'une tension de sortie de l'enroulement 110. La résistance additionnelle 6 a une valeur au moins égale à celle de la résistance principale d'amortissement 2.

Le commutateur statique 7 est ici un transistor bipolaire de type NPN dont l'émetteur est relié à la résistance additionnelle d'amortissement 6.

Le module de commande 8 comprend, en parallèle de la résistance principale d'amortissement 2, trois branches ayant une extrémité reliée à la cathode d'une diode d'entrée 9 dont l'anode est connectée à la ligne 3 et une extrémité reliée directement à la ligne 4.

La première des trois branches comprend deux résistances 10, 11 en série pour former un pont diviseur ; la deuxième branche comprend une résistance 12 reliée en série à la diode 9 et à la cathode d'une diode ZENER 13 programmable ayant une anode reliée à la ligne 4 ; la troisième branche comprend un transistor bipolaire 14 de type PNP dont l'émetteur est relié à la diode 9 et le collecteur est relié à une résistance 15 reliée à la ligne 4. Le point milieu du pont diviseur est relié à une entrée de référence de la diode ZENER 13 ; le point de connexion de la diode ZENER 13 à la résistance 12 est relié à l'entrée de commande (la base) du transistor bipolaire 14 et le collecteur du transistor bipolaire 14 est relié à l'entrée de commande (la base) du commutateur statique 7.

La cellule d'amortissement additionnel 5.2 comprend les mêmes composants que la cellule d'amortissement additionnel 5.1 et est raccordée aux lignes 3, 4 tête-bêche par rapport à la cellule d'amortissement additionnel 5.1.

On remarque que la diode ZENER 13 forme un shunt dont la conduction dépend de la tension de sortie du pont diviseur (qui dépend de la tension de sortie de l'enroulement) de manière à former un comparateur de la tension de sortie de l'enroulement à la tension de conduction du shunt. Lorsque la tension de sortie du pont diviseur est supérieure à la tension de conduction (cas d'une vitesse élevée du rotor engendrant une tension relativement importante dans l'enroulement), le shunt est passant et commande la conduction du transistor bipolaire 14 qui commande lui-même la conduction du commutateur statique 7 connectant la résistance additionnelle d'amortissement 6 en parallèle de la résistance principale d'amortissement 2. Lorsque la tension de sortie du pont diviseur est inférieure à la tension de conduction (cas d'une vitesse relativement faible du rotor), le shunt est bloquant et commande le blocage du transistor bipolaire 14 qui commande lui-même le blocage du commutateur statique 7 déconnectant la résistance additionnelle d'amortissement 6 de la résistance principale d'amortissement 2.

Les cellules d'amortissement 5.1, 5.2 sont, du fait de la présence de la diode d'entrée 9, actives respectivement lorsque la tension de sortie de l'enroulement est positive et lorsque la tension de sortie de l'enroulement est négative.

Bien entendu, l'invention n'est pas limitée au mode de réalisation décrit mais englobe toute variante entrant dans le champ de l'invention telle que définie dans les revendications.

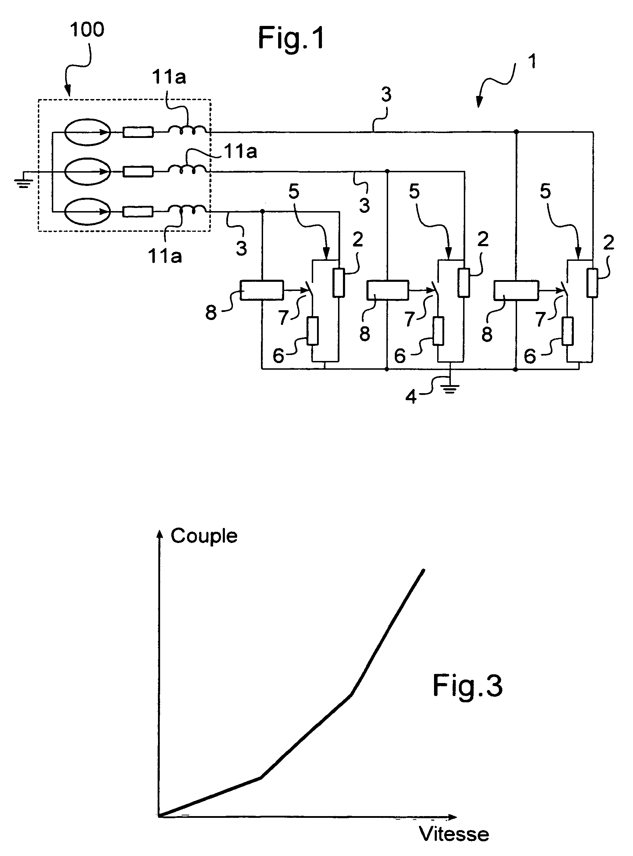

En particulier, le circuit peut comprendre plus de deux cellules d'amortissement additionnel par enroulement pour fournir une loi d'amortissement comprenant plus de deux pentes. Ceci permet d'avoir une loi d'amortissement dont la forme se rapproche d'une parabole (voir la figure 3).

Il peut également être envisagé un circuit ne comportant qu'une cellule d'amortissement additionnel par enroulement pour n'assurer un amortissement que lorsque la tension est positive ou négative. En outre, il n'est pas obligatoire qu'une cellule d'amortissement additionnel soit reliée à chacun des enroulements.

En variante, le pont diviseur comprend au moins une résistance variable pour permettre un réglage de la tension aux bornes de l'enroulement à partir de laquelle les cellules d'amortissement additionnel sont connectées.

Le nombre de résistances peut être différent de celui décrit de même que la structure en trois branches parallèles du module de commande 8.

D'autres types de commutateur statique peuvent être utilisés à la place des transistors bipolaires 7 et 14.

## Revendications

1. Circuit d'amortissement d'un servomoteur synchrone comprenant au moins un enroulement, le circuit comportant au moins une résistance principale d'amortissement (2) et des moyens de raccordement (3, 4) de la résistance principale d'amortissement en série avec l'enroulement, le circuit étant **caractérisé en ce qu'**il comporte au moins une cellule d'amortissement additionnel (5.1, 5.2) comportant au moins une résistance additionnelle d'amortissement (6) reliée en parallèle à la résistance principale d'amortissement via un commutateur statique (7) raccordé à un module de commande (8) du commutateur en fonction d'une tension de l'enroulement, et **en ce que** le module de commande comprend en parallèle de la résistance principale d'amortissement un shunt (13) ayant une sortie reliée à l'entrée de commande du commutateur et un pont diviseur (10, 11) relié au shunt pour former un comparateur de la tension de l'enroulement à une tension de conduction du shunt.

2. Circuit selon la revendication 1, dans lequel le pont diviseur comprend au moins une résistance variable.

3. Circuit selon la revendication 1, comportant deux cellules d'amortissement additionnel (5.1, 5.2) qui sont identiques mais montées tête-bêche, les cellules d'amortissement comportant chacun une diode d'entrée (9) de manière à être actives respectivement lorsque la tension de l'enroulement est positive et lorsque la tension de l'enroulement est négative.

4. Circuit selon la revendication 1, dans lequel le module de commande (8) comprend trois branches en parallèle de la résistance principale d'amortissement (2), à savoir une première branche avec deux résistances (10, 11) en série pour former le pont diviseur ; une deuxième branche avec le shunt (13) ; une troisième branche avec un commutateur statique (14) ; le pont diviseur ayant un point milieu relié à une entrée de référence du shunt ; le shunt étant relié au commutateur statique de la troisième branche pour commander celui-ci et le commutateur statique de la troisième branche étant relié au commutateur statique (7) connecté à la résistance additionnelle d'amortissement (6).

## Patentansprüche

1. Dämpfungsschaltung eines synchronen Servomotors, umfassend mindestens eine Wicklung, wobei die Schaltung mindestens einen Dämpfungshauptwiderstand (2) und Anschlussmittel (3, 4) des Dämpfungshauptwiderstands in Serie mit der Wicklung umfasst, wobei die Schaltung **dadurch gekennzeichnet ist, dass** sie mindestens eine zusätzliche Dämpfungszelle (5.1, 5.2) aufweist, die mindestens einen zusätzlichen Dämpfungswiderstand (6) aufweist, der parallel zu dem Dämpfungshauptwiderstand über einen statischen Schalter (7) verbunden ist, der mit einem Steuermodul (8) des Schalters abhängig von einer Spannung der Wicklung verbunden ist, und dass das Steuermodul parallel zu dem Dämpfungshauptwiderstand einen Shunt (13) umfasst, der einen mit dem Steuereingang des Schalters verbundenen Ausgang aufweist, sowie eine Teilerbrücke (10, 11), die zur Bildung eines Komparators zum Vergleichen der Wicklungsspannung mit einer Leitungsspannung des Shunts an den Shunt angeschlossen ist.

2. Schaltung nach Anspruch 1, wobei die Teilerbrücke mindestens einen variablen Widerstand umfasst.

3. Schaltung nach Anspruch 1, umfassend zwei zusätzliche Dämpfungszellen (5.1, 5.2), die identisch, aber entgegengesetzt montiert sind, wobei jede der Dämpfungszellen eine Eingangsdiode (9) umfasst, so dass sie jeweils aktiv sind, wenn die Wicklungsspannung positiv ist bzw. wenn die Wicklungsspannung negativ ist.

4. Schaltung nach Anspruch 1, wobei das Steuermodul (8) drei parallel zum Dämpfungshauptwiderstand (2) verlaufende Zweige umfasst, nämlich einen ersten Zweig mit zwei zur Bildung der Teilerbrücke in Serie geschalteten Widerständen (10, 11); einen zweiten Zweig mit dem Shunt (13); einen dritten Zweig mit einem statischen Schalter (14); wobei die Teilerbrücke einen mit einem Referenzeingang des Shunts verbundenen Mittelpunkt umfasst; wobei der Shunt mit dem statischen Schalter des dritten Zweigs zur Steuerung desselben verbunden ist und der statische Schalter des dritten Zweigs mit dem statischen Schalter (7) verbunden ist, der an den zusätzlichen Dämpfungswiderstand (6) angeschlossen ist.

## Claims

1. A damper circuit for damping a synchronous servo-motor having at least one winding, the damper circuit including at least one main damper resistor (2) and connection means (3, 4) for connecting the main damper resistor in series with the winding, the damper circuit being **characterized in that** it includes at least one additional damper cell (5.1, 5.2) having at least one additional damper resistor (6) connected in parallel with the main damper resistor via a static switch (7) connected to a control module (8) for controlling the switch as a function of a voltage of the winding, and **in that** the control module comprises a shunt (13) in parallel with the main damper resistor, the shunt having an output connected to the control input of the switch and a divider bridge (10, 11) connected to the shunt in order to form a comparator between the voltage of the winding and a conduction voltage of the shunt.

2. A circuit according to claim 1, wherein the divider bridge includes at least one variable resistor.

3. A circuit according to claim 1, including two additional damper cells (5.1, 5.2) that are identical but mounted opposite ways round, each damper cell having an input diode (9) so as to be active respectively when the voltage of the winding is positive and when the voltage of the winding is negative.

4. A circuit according to claim 1, wherein the control module (8) has three branches in parallel with the main damper resistor (2), namely: a first branch having two resistors (10, 11) in series to form the divider bridge; a second branch with the shunt (13); and a third branch with a static switch (14); the divider bridge having a midpoint connected to a reference input of the shunt; the shunt being connected to the static switch of the third branch in order to control it, and the static switch of the third branch being connected to a static switch (7) connected to the additional damper resistor (6).
